# EUROPÄISCHE PATENTSCHRIFT

(11) **EP 3 004 688 B1**
(45) Veröffentlichungstag und Bekanntmachung des Hinweises auf die Patenterteilung: **27.12.2017**
(21) Anmeldenummer: 14727194.4
(22) Anmeldetag: 27.05.2014
(51) Int. Cl.: F16H 37/04, F16H 3/097

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE AUTOMOBILE

(30) Priorität: 06.06.2013 AT 503732013
(43) Veröffentlichungstag der Anmeldung: 13.04.2016
(73) Patentinhaber: AVL List GmbH, 8020 Graz (AT)
(72) Erfinder: KUNTNER, Stefan, A-4481 Asten (AT); WOENTNER, Gebhard, A-4493 Wolfern (AT)
(74) Vertreter: Babeluk, Michael
(86) Internationale Anmeldenummer: PCT/EP2014/060935
(87) Internationale Veröffentlichungsnummer: WO 2014/195186

(56) Entgegenhaltungen:
- EP-A1- 2 481 948
- WO-A1-2011/069526
- WO-A1-2013/187822

## Beschreibung

Die Erfindung betrifft ein Doppelkupplungsgetriebe für ein Kraftfahrzeug, mit einer Eingangswelle und einer Hauptwelle, wobei die Eingangswelle über eine schaltbare erste Kupplung mit einer ersten Vorgelegewelle und über eine schaltbare zweite Kupplung mit einer zweiten Vorgelegewelle verbindbar ist, wobei die erste Vorgelegewelle und die zweite Vorgelegewelle jeweils über zumindest eine über eine Schalteinrichtung schaltbare Zahnradstufe mit der Hauptwelle antriebsverbindbar ist, und wobei zwischen der Hauptwelle und einer Ausgangswelle des Doppelkupplungsgetriebes ein Bereichsgruppengetriebe angeordnet ist, wobei zumindest eine Vorgelegewelle, vorzugsweise die erste Vorgelegewelle, über zumindest eine vorzugsweise schaltbare Zahnradstufe - besonders vorzugsweise über genau eine zusätzliche Zahnradstufe - unter Umgehung des Bereichsgruppengetriebes direkt mit der Ausgangswelle antriebsverbindbar ist.

Die AT 510 966 B1 offenbart ein Doppelkupplungsgetriebe für ein Kraftfahrzeug, mit einer Eingangswelle und einer Hauptwelle, wobei die Eingangswelle über eine schaltbare erste Kupplung mit einer ersten Vorgelegewelle und über eine schaltbare zweite Kupplung mit einer zweiten Vorgelegewelle verbindbar ist. Die erste Vorgelegewelle und die zweite Vorgelegewelle ist jeweils über zumindest ein über eine Schalteinrichtung schaltbares Zahnradpaar mit der Hauptwelle antriebsverbindbar. Zwischen der Hauptwelle und einer Ausgangswelle des Getriebes ist ein Bereichsgruppengetriebe angeordnet. Als Synchronisierungseinrichtung ist eine Hydraulikeinheit vorgesehen, welche Hydraulikeinheit eine mit der ersten Vorgelegewelle antriebsverbundene erste hydraulische Maschine und eine mit der zweiten Vorgelegewelle antriebsverbundene zweite hydraulische Maschine aufweist.

Die Gänge solcher Doppelkupplungsgetriebe sind innerhalb einer Bereichsgruppe ohne Zugkraftunterbrechung schaltbar. Eine Umschaltung der Bereichsgruppe kann allerdings nur unter Trennung der Zugkraft bewerkstelligt werden.

Aus den Veröffentlichungen US 6,427,549 B1 und EP 1 270 301 A2 sind Doppelkupplungsgetriebe mit einer Eingangswelle und einer Ausgangswelle, sowie mit zwei Vorgelegewellen bekannt, wobei die Drehzahlen der Vorgelegewellen über Synchronisiereinrichtungen mit der Drehzahl der Ausgangswelle abstimmbar sind. Dabei wird die Drehzahl der nicht mit der Eingangswelle antriebsverbundenen Vorgelegewelle über einen Elektromotor angetrieben oder abgebremst, bis eine Synchronisierung mit einem auf der Vorgelegewelle frei laufenden Zahnrad erfolgt, welches über eine Getriebestufe mit der Ausgangswelle verbunden ist.

Sobald eine Synchronisation vorliegt, wird das Zahnrad über eine Klauenkupplung mit der Vorgelegewelle antriebsverbunden.

Die DE 10 2007 018 967 A1 beschreibt ferner ein automatisiertes Gruppengetriebe für ein Fahrzeug mit einem Hauptgetriebe und zumindest einer vorgeschalteten und/oder nachgeschalteten Nachbereichsgruppe und mit zumindest einer Vorgelegewelle, wobei die Vorgelegewelle mit zumindest einer hydraulischen Anordnung in Wirkverbindung steht, um einen Nebenabtrieb vorzusehen. Die hydraulische Anordnung weist zumindest ein Antriebsaggregat zum Steuern und/ oder Regeln jeder Vorgelegewelle auf.

Die US 2009/272 211 A1 offenbart ein Mehrgruppengetriebe eines Kraftfahrzeuges mit zwei in einem Antriebsstrang angeordneten Getriebegruppen, wobei durch Elektromagnetkupplungen gebildete Lastschaltmittel vorgesehen sind, über die unter Kraftflussumgehung wenigstens einer als Zahnrad-Wechselgetriebe ausgebildeten Hauptgruppe eine Wirkverbindung zwischen einer Antriebswelle und einer Getriebehauptwelle oder einer Getriebeabtriebswelle herstellbar ist.

In der WO 86/02608 A1 wird eine Antriebsanordnung für Nutzfahrzeuge beschrieben, welche ein Wechselgetriebe und eine Dauerbremseinrichtung aufweist, die an einer mit einer Übersetzung ins Schnelle angetriebenen, zu der Abtriebswelle des Wechselgetriebes versetzt liegenden Welle angeordnet ist. Der Antrieb der Dauerbremseinrichtung erfolgt über eine Stirnradstufe, deren großes Rad direkt am Austritt der Abtriebswelle aus dem Wechselgetriebe angeordnet ist. Zwischen dem Antrieb der Dauerbremseinrichtung und der Dauerbremseinrichtung ist eine Trennkupplung angeordnet.

Aus der EP 2 481 948 A1 ist es bekannt, eine durch eine elektrische Maschine gebildete Dauerbremseinrichtung an einer Vorgelegewelle eines Doppelkupplungsgetriebes anzuordnen.

Die WO 2013/187822 A1 beschreibt ein Doppelkupplungsgetriebe für ein Fahrzeug, bei dem eine Vorgelegewelle über eine zusätzlicher Zahnradstufe unter Umgehung eines Bereichsgruppengetriebes direkt mit einer Ausgangswelle antriebsverbunden werden kann. Die Vorgelegewelle ist direkt oder über eine weiterZahnradstufe mit einer Dauerbremseinrichtung verbunden bzw. verbindbar.

Aus der WO 2011/069 526 A1 ist ein lastschaltbares Doppelkupplungsgetriebe für ein Fahrzeug bekannt, welches ein Bereichsgruppengetriebe zwischen einer Hauptwelle und einer Ausgangswelle aufweist. Ein Retarderantriebsrad ist drehfest auf der Ausgangswelle angeordnet. Über eine Kupplung kann die Eingangswelle des Doppelkupplungsgetriebes mit der Hauptwelle, über die andere Kupplung mit einer Gegenwelle verbunden werden, wobei zwischen Hauptwelle und Gegenwelle mehrere schaltbare Zahnradstufen angeordnet sind. Die Gegenwelle kann über eine das Bereichsgruppengetriebe umgehende Umgehungswelle und eine Zahnradstufe mit dem auf der Ausgangswelle angeordneten Retarderantriebsrad antriebsverbunden werden. Somit kann durch Herstellen einer Antriebsverbindung zwischen einem Losrad der Zahnradstufe und der Umgehungswelle über ein Schaltelement das Bereichsgruppengetriebe lastfrei geschaltet werden, wodurch dieses unter Last und ohne Zugkraftunterbrechung für die Ausgangswelle zwischen einer niedrigen und einer hohen Laststufe umgeschaltet werden kann. Weiters kann durch Umschalten des Schaltelementes die Umgehungswelle mit einer Zapfwelle antriebsverbunden werden. Durch die zentrale Anordnung des Retarderantriebsrads auf der Ausgangswelle ergeben sich bauliche Zwänge für die Ausführung und Platzierung der Dauerbremseinrichtung.
Aufgabe der Erfindung ist es, auf möglichst einfache Weise hohe Flexibilität und Variabilität bei der Anordnung und Ausführung der Dauerbremseinrichtung bei einem Doppelkupplungsgetriebe der eingangs genannten Art zu ermöglichen und andererseits einen lastschaltbaren Bereichsgruppenwechsel zu realisieren.

Erfindungsgemäß wird dies dadurch erreicht, dass eine mit der zumindest einen Vorgelegewelle verbindbare Zwischenwelle direkt oder über eine weitere Zahnradstufe mit einer Dauerbremseinrichtung antriebsverbunden oder antriebsverbindbar ist, und dass die Dauerbremseinrichtung direkt oder indirekt mit der Zwischenwelle drehfest verbunden ist, welche über zumindest eine Schalteinrichtung mit der zumindest einen Vorgelegewelle verbindbar ist.
Zum Unterschied zur WO 2011/069 526 A1 liegt das Antriebsrad der Dauerbremseinrichtung beabstandet zur Ausgangswelle und kann koaxial zur ersten Vorgelegewelle und von dieser, oder einer achsgleichen Zwischenwelle direkt oder indirekt über die weitere Zwischenstufe angetrieben werden. Die von der Ausgangswelle abgesetzte Anordnung der Dauerbremseinrichtung erhöht die Freiheiten bei der Auswahl und Konstruktion der Dauerbremseinrichtung und verringert bauliche Zwänge.
Gemäß einer weiteren Ausführungsvariante der Erfindung kann die zusätzliche Zahnradstufe - vorzugsweise über die Zwischenwelle - mittels einer Schalteinrichtung mit der vorzugsweise ersten Vorgelegewelle antriebsverbindbar oder von dieser trennbar ausgebildet sein, wobei vorzugsweise die zusätzliche Zahnradstufe nur Festräder aufweist. Im Vergleich zu Losrädern verringern Festräder den Herstellungsaufwand und Platzbedarf. Die Schalteinrichtung zum Verbinden der ersten Vorgelegewelle mit der Ausgangswelle ist in diesem Falle zwischen der Vorgelegewelle und der Zwischenwelle angeordnet, wobei die Zwischenwelle drehfest mit einem Zahnrad der zusätzlichen Zahnradstufe verbunden ist. Diese Anordnung erlaubt größere konstruktive Freiheit als eine Anordnung der Schalteinrichtung auf der Ausgangswelle. Die Dauerbremseinrichtung wird über die Zwischenwelle direkt oder indirekt über die weitere Zahnradstufe angetrieben und nutzt die - durch die Forderung der Lastschaltbarkeit des Bereichsgruppengetriebes - bestehende Verbindung zwischen Ausgangswelle und Zwischenwelle (Doppelnutzung). Durch die dezentrale Anordnung des Schaltelementes und die dadurch mögliche Verwendung von Festrädern bei der zusätzlichen Zahnradstufe ergibt sich ein geringerer Herstellungsaufwand und eine platzsparende Bauweise des Doppelkupplungsgetriebes.

Durch den direkten Antrieb der Dauerbremseinrichtung durch die erste Vorgelegewelle oder die Zwischenwelle kann eine äußerst kompakte Bauweise des Doppelkupplungsgetriebes mit wenigen Teilen realisiert werden.

Wird die Dauerbremseinrichtung über eine weitere Zahnradstufe angetrieben, so ergeben sich weitere Freiheiten bei der Wahl der Antriebsdrehzahl der Dauerbremseinrichtung und bei der Positionierung der Dauerbremseinrichtung. Die weitere Zahnradstufe ermöglicht darüber hinaus eine Drehrichtungsumkehr in Bezug zur Vorgelegewelle, so dass die Dauerbremseinrichtung im gleichen Sinn wie die Ausgangswelle angetrieben wird.

Die Dauerbremseinrichtung kann beispielsweise als hydrodynamische Bremse, als elektrodynamische Bremse, als Radialkolbenmaschine oder als Axialkolbenmaschine ausgebildet sein.

Die erste und die zweite Kupplung ist vorteilhafterweise als nasslaufende Lamellenkupplung ausgebildet, wodurch hohe Drehmomente bei kleinem Bauraum und geringem Gewicht übertragbar sind.

Vorzugsweise sind die erste Kupplung und die zweite Kupplung koaxial zur Hauptwelle angeordnet. Dies ermöglicht eine schlanke Bauweise des Doppelkupplungsgetriebes.

In weiterer Ausführung der Erfindung kann vorgesehen sein, dass das Bereichsgruppengetriebe ein Planetengetriebe aufweist. Auf diese Weise können besonders hohe Übersetzungsverhältnisse und die für eine praktikable Gangabstufung erforderliche Anzahl der Gänge mit einer geringen Anzahl von Bauteilen realisiert werden. Das Bereichsgruppengetriebe kann dabei zwei Bereichsgruppen - eine langsame und eine schnelle Bereichsgruppe - aufweisen. Die zumindest eine schaltbare zusätzliche Zahnradstufe kann mit dem Planetenträger des Planetengetriebes antriebsverbindbar oder antriebsverbunden sein.

Besonders vorteilhaft ist es, wenn die mit der Eingangswelle verbundene erste Kupplung über eine erste Getriebestufe mit der ersten Vorgelegewelle und die mit der Eingangswelle verbundene zweite Kupplung über eine zweite Getriebestufe mit der zweiten Vorgelegewelle verbunden ist, wobei vorzugsweise die erste und die zweite Getriebestufe unterschiedliche Übersetzungsverhältnisse aufweisen. Durch die unterschiedlichen Übersetzungsstufen werden die Vorgelegewellen mit unterschiedlichen Drehzahlen angetrieben. Die erste Getriebestufe kann dabei zwischen erster Kupplung und erster Vorgelegewelle und die zweite Getriebestufe zwischen zweiter Kupplung und zweiter Vorgelegewelle angeordnet sein.

Bei einer besonders vorteilhaften weiteren Ausführung entspricht der Übersetzungssprung zwischen erster und zweiter Getriebestufe dem gewünschten Übersetzungssprung zwischen den einzelnen Getriebegängen, wodurch eine baugleiche Ausbildung der Zahnradgruppen an den beiden Vorgelegewellen ermöglicht wird.

Die zumindest eine zusätzliche Zahnradstufe ist vorteilhafterweise so ausgelegt, dass das effektiv auf die Ausgangswelle wirkende Übersetzungsverhältnis zwischen der höchsten Gangstufe der langsamen Bereichsgruppe und der niedrigsten Gangstufe der schnellen Bereichsgruppe liegt.

Um einen direkten Durchtrieb zu ermöglichen, kann in weiterer Ausführung der Erfindung vorgesehen sein, dass die Eingangswelle mit der Hauptwelle direkt über eine weitere Schalteinrichtung verbindbar ist.

Das Doppelkupplungsgetriebe kann modular aufgebaut sein und aus einem Kupplungsteil, einem Hauptgetriebeteil und dem Bereichsgruppengetriebeteil bestehen. Somit kann es für unterschiedliche Einsatzgebiete und Fahrzeuge, wie zum Beispiel Autobusse, Lastkraftwagen, Straßenfahrzeuge und Geländefahrzeuge angewendet werden.

Die zusätzliche Zahnradstufe ist - bezogen auf den Kraftfluss im Antriebsfall - bevorzugt nach dem Bereichsgruppengetriebe angeordnet.

Durch diese beschriebene Anordnung kann auf besonders einfache Weise ein vollständig lastschaltbares Doppelkupplungsgetriebe mit einer herkömmlichen Bereichsgruppe realisiert werden.

Für einen Hochschaltvorgang wird - bei geschalteter langsamen Bereichsgruppe - die höchste Gangstufe der einen Vorgelegewelle - vorzugsweise der zweiten Vorgelegewelle - eingelegt und die Kupplung der einen Vorgelegewelle eingekuppelt. Während die Kupplung der anderen - vorzugsweise ersten - Vorgelegewelle deaktiviert ist, wird die zusätzliche Zahnradstufe der anderen Vorgelegewelle eingelegt. Danach kann die Kupplung der anderen Vorgelegewelle ein- und gleichzeitig die Kupplung der einen Vorgelegewelle ausgekuppelt werden. Der Antrieb erfolgt nun über die zusätzliche Zahnradstufe. Das nun entlastete Bereichsgruppengetriebe wird von einer langsamen Bereichsgruppe in eine schnelle Bereichsgruppe geschaltet und die nächsthöhere Gangstufe der lastfrei geschalteten einen Vorgelegewelle eingelegt. Danach wird die Kupplung der einen Vorgelegewelle ein- und gleichzeitig die Kupplung der anderen Vorgelegewelle ausgekuppelt - der Antrieb wird somit wieder auf die eine Vorgelegewelle gelegt. Die zusätzliche Zahnradstufe der nun lastfreien anderen Vorgelegewelle kann wieder deaktiviert werden.

Der Runterschaltvorgang aus einer geschalteten schnellen Bereichsgruppe erfolgt genau umgekehrt: Es wird - bei geschalteter schneller Bereichsgruppe - die niedrigste Gangstufe der einen Vorgelegewelle - vorzugsweise der zweiten Vorgelegewelle - eingelegt und die Kupplung der einen Vorgelegewelle eingekuppelt. Während die Kupplung der anderen - vorzugsweise ersten - Vorgelegewelle deaktiviert ist, wird die zusätzliche Zahnradstufe der anderen Vorgelegewelle eingelegt. Danach kann die Kupplung der anderen Vorgelegewelle ein- und gleichzeitig die Kupplung der einen Vorgelegewelle ausgekuppelt werden. Der Antrieb erfolgt nun, wie beim Hochschaltvorgang, über die zusätzliche Zahnradstufe. Das nun entlastete Bereichsgruppengetriebe kann von der schnellen Bereichsgruppe in eine langsame Bereichsgruppe geschaltet und die nächstniedrige Gangstufe der lastfrei geschalteten einen Vorgelegewelle eingelegt werden. Danach wird die Kupplung der einen Vorgelegewelle ein- und gleichzeitig die Kupplung der anderen Vorgelegewelle ausgekuppelt - der Antrieb wird somit wieder auf die eine Vorgelegewelle gelegt. Die zusätzliche Zahnradstufe der nun lastfreien anderen Vorgelegewelle kann wieder deaktiviert werden.

Das besondere des Verfahrens ist, dass nur eine einzige zuschaltbare Zahnradstufe vorgesehen sein muss, um einen lastschaltbaren Bereichsgruppenwechsel zu ermöglichen. Dies wirkt sich vorteilhaft auf Baugröße, Gewicht und Fertigungskosten aus.

Die Erfindung wird im Folgenden anhand der Figuren näher erläutert. Es zeigen:
- Fig. 1: ein nicht erfindungsgemäßes Doppelkupplungsgetriebe in einer ersten Ausführungsvariante;
- Fig. 2: ein nicht erfindungsgemäßes Doppelkupplungsgetriebe in einer zweiten Ausführungsvariante;
- Fig. 3: ein erfindungsgemäßes Doppelkupplungsgetriebe in einer dritten Ausführungsvariante; und
- Fig. 4: ein erfindungsgemäßes Doppelkupplungsgetriebe in einer vierten Ausführungsvariante.

Die Fig. zeigen jeweils schematisch ein erfindungsgemäßes Doppelkupplungsgetriebe 10 mit zwölf Vorwärtsgängen und einem Rückwärtsgang.

Die unterschiedlichen Gangstufen sind in den Fig. mit den Bezugszeichen 1, 2, 3, 4, 5, 6, 7 für die Vorwärtsgänge und R1 für den Rückwärtsgang bezeichnet.

Das in den Fig. dargestellte Doppelkupplungsgetriebe 10 weist eine mit einer nicht weiter dargestellten Brennkraftmaschine verbundene Eingangswelle 11 und eine mit einer Ausgangswelle 12 verbundene Hauptwelle 13 auf. Die Eingangswelle 11 steht über einstufige erste bzw. zweite Getriebestufen 14, 15, welche unterschiedliche Übersetzungsverhältnisse aufweisen, mit jeweils einer ersten Vorgelegewelle 16 und einer zweiten Vorgelegewelle 17 in Verbindung. Zwischen der Eingangswelle 11 und der ersten Getriebestufe 14 bzw. der ersten Vorgelegewelle 16 ist eine erste schaltbare Kupplung 18, zwischen Eingangswelle 11 und der zweiten Getriebestufe 15 bzw. der zweiten Vorgelegewelle 17 eine schaltbare zweite Kupplung 19 angeordnet. Die Kupplungen 18 und 19 sind als nasslaufende Lamellenkupplungen ausgebildet. Die erste und die zweite Kupplung 18, 19 können in der geschlossenen Stellung federbelastet sein, wodurch keine aktive Kraftaufbringung erforderlich ist, um die Antriebsverbindung zwischen der Eingangswelle 11 und der Vorgelegewelle 16, 17 herzustellen. Aus sicherheitsrelevanten Gründen kann aber auch zumindest bei einer der beiden Kupplungen 18, 19 das Schließen mit hydraulischem Druck anstelle mit einer Schließfeder erfolgen.

Im Antriebsstrang des Doppelkupplungsgetriebes 10 ist weiters ein mit der Hauptwelle 13 verbundenes Bereichsgruppengetriebe 21 vorgesehen, mit welchem ein Umschalten zwischen hohen Übersetzungsverhältnissen - schnelle Bereichsgruppe HIGH - und niedrigen Übersetzungsverhältnissen - langsame Bereichsgruppe LOW - möglich ist. Im einfachsten Fall kann das Bereichsgruppengetriebe 21 aus zwei Zahnradpaaren mit unterschiedlichen Übersetzungsverhältnissen mit jeweils einem festen Zahnrad und einem losen Zahnrad gebildet werden, zwischen welchen über eine Schalteinrichtung umgeschaltet werden kann. In einer kompakten Ausführung kann das Bereichsgruppengetriebe 21 als Planetengetriebe 24 ausgebildet sein, wobei ein Element des Planetengetriebes 24 - beispielsweise das Hohlrad 24h - über eine Schalteinrichtung 201 festgehalten oder mit einem zweiten Element des Planetengetriebes 24 - beispielsweise den Planetenträger 24p - verbunden werden kann. Das Sonnenrad 24s des Planetengetriebes kann mit der Hauptwelle 13 verbunden sein.

Mit Bezugszeichen 25 ist eine mit der Hauptwelle 13 oder Ausgangswelle 12 verbundene Parksperre bezeichnet.

Die Vorgelegewellen 16, 17 stehen jeweils über Zahnradstufen ZA1, ZA2, ZA3, ZA4, ZA5, ZR1 mit der Hauptwelle 13 in Verbindung. Weiters ist zwischen der ersten Vorgelegewelle 16 und der Ausgangswelle 12 eine schaltbare zusätzliche Zahnradstufe ZA7 vorgesehen, mit welcher ein Gang 7, der zwischen dem höchsten Gang 6 der langsamen Bereichsgruppe LOW und dem niedrigsten Gang 2 der schnellsten Bereichsgruppe HIGH liegt, geschalten werden kann. Die zusätzliche Zahnradstufe ZA7 kann dabei - in Antriebsrichtung gesehen - nach dem Bereichsgruppengetriebe 21 angeordnet sein.

Die Zahnräder der Zahnradstufen ZA1, ZA2, ZA3, ZA4, ZA5, ZA7, ZR1, der Getriebestufe 14, 15 und des Bereichsgruppengetriebes 21 sind mit z1, z2, z3, z4, z5, z6, z7, z8, z9, z11, z12, z13, z14, z15, z16, z17 bezeichnet, wobei baugleiche Zahnräder mit dem gleichen Bezugszeichen versehen sind.

Jede Zahnradstufe ZA1, ZA2, ZA3, ZA4, ZA5, ZA7, ZR1 weist jeweils zumindest ein frei auf einer Welle - zum Beispiel einer Vorgelegewelle 16, 17 -umlaufendes Zahnrad und ein mit einer anderen Welle - zum Beispiel der Hauptwelle 13 - drehfest verbundenes Zahnrad auf. Die Zahnradstufe ZR1 des Rückwärtsganges R1 weist zusätzlich noch ein Umkehrzahnrad z10 auf. Um Herstellungskosten zu sparen, können jeweils zwei auf den Vorgelegewellen 16, 17 gegenüberliegende Zahnräder als Gleichteile ausgebildet sein. Die Zahnräder können freilaufend auf den Vorgelegewellen 16, 17 gelagert sein und stehen mit drehfest mit der Hauptwelle 13 verbundenen Zahnrädern im Zahneingriff.

Um jeweils die frei umlaufenden Zahnräder mit der jeweiligen Vorgelegewelle 16, 17 bzw. Hauptwelle 13 antriebsfest zu verbinden, sind Schaltelemente 20, 202 vorgesehen, welche durch Synchronisiereinheiten oder - insbesondere im Falle von externen elektrischen oder hydraulischen Synchronisiereinrichtungen - durch einfache, nichtsynchronisierte Klauenkupplungen gebildet werden können. Die Schaltelemente 20, 201, 202 können über nicht weiter dargestellte Aktuatoren beispielsweise hydraulisch betätigt werden.

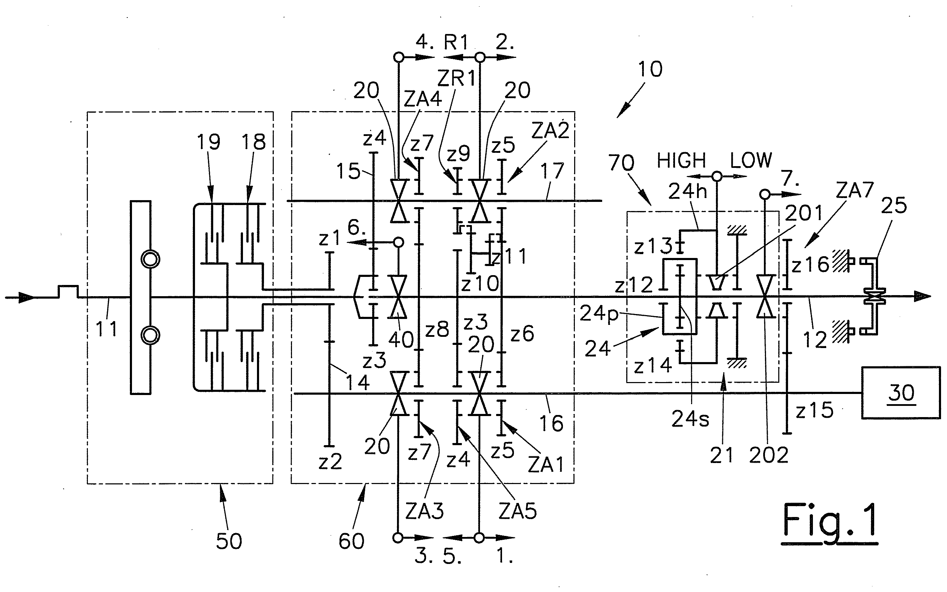

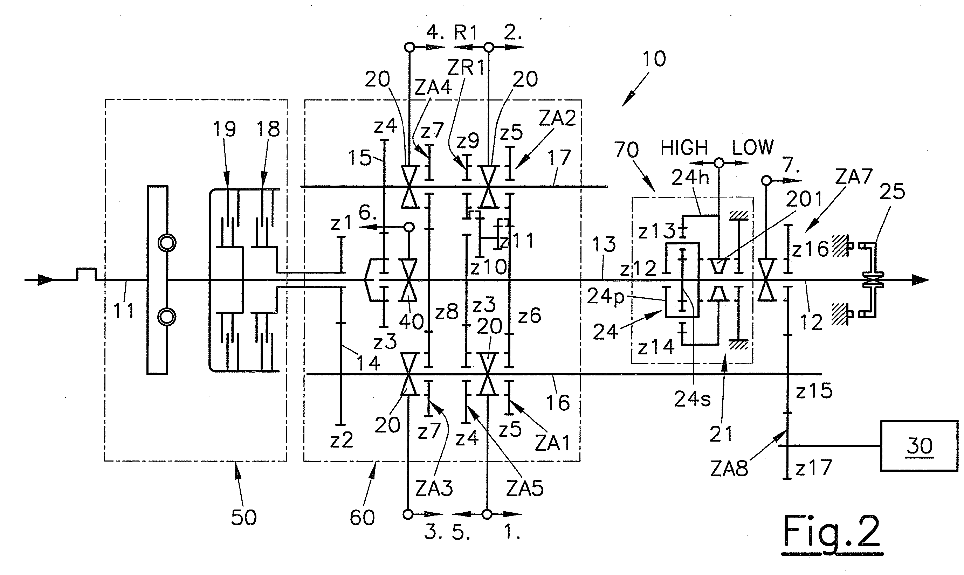

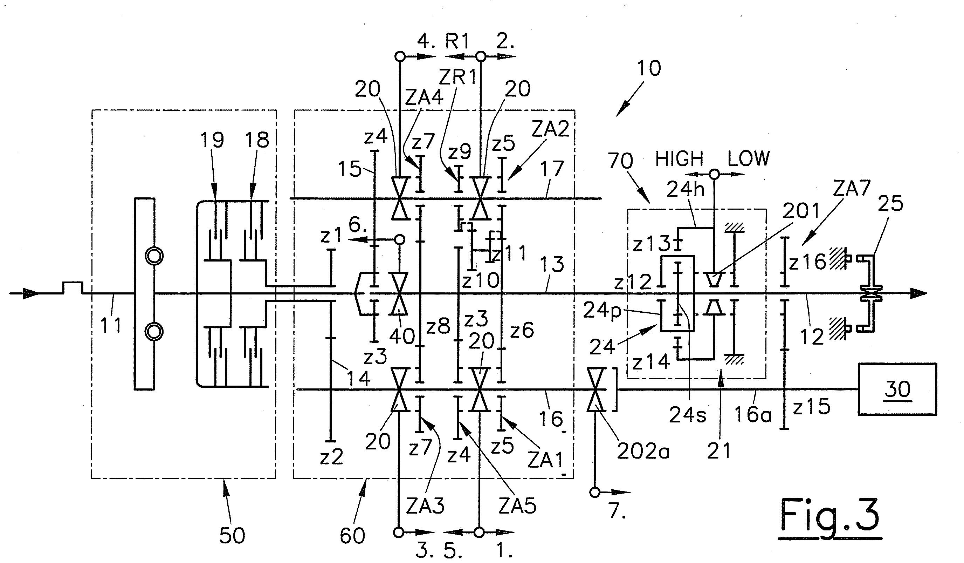

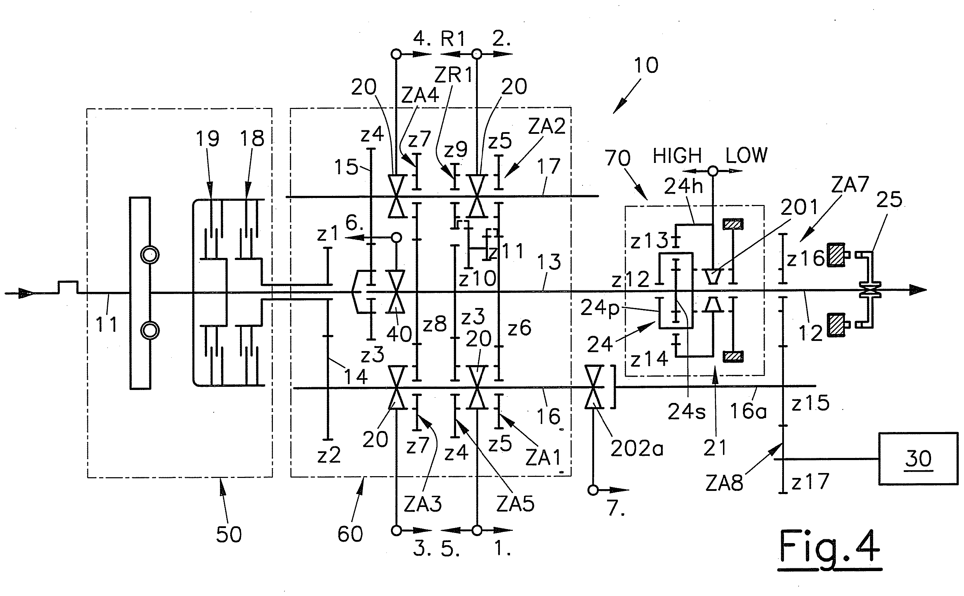

Das Zahnrad z16 der über das Schaltelement 202 bzw. 202a schaltbaren zusätzlichen Zahnradstufe ZA7 steht mit dem Planetenträger 24p des Planetengetriebes 24 in drehfester Verbindung, wobei das Schaltelement 202, 202a entweder auf der ersten Vorgelegewelle 16 zwischen der ersten Vorgelegewelle 16 und einer Zwischenwelle 16a, welche die Zahnradstufe ZA7 mit der ersten Vorgelegewelle 16 antriebsverbindet (Fig. 3, Fig. 4), oder auf der Ausgangswelle 12 (Fig. 1, Fig. 2) angeordnet sein kann. Ist das Schaltelement 202a zwischen der ersten Vorgelegewelle 16 und einer Zwischenwelle 16a angeordnet, so können beide Zahnräder der zusätzlichen Zahnradstufe ZA7 durch Festräder gebildet sein (Fig. 3, Fig. 4). Ist das Schaltelement 202 auf der Ausgangswelle 12 angeordnet, so ist ein Zahnrad z16 der zusätzlichen Zahnradstufe ZA7 als Losrad - also nicht drehfest mit der Ausgangswelle 12 verbunden - ausgebildet (Fig. 1, Fig. 2).

Im Antriebsfall ist eine der beiden Vorgelegewellen 16, 17 über die jeweilige Kupplung 18, 19 mit der Eingangswelle 11 antriebsverbunden, während die jeweils andere Vorgelegewelle 17, 16 von der Antriebswelle 11 getrennt ist.

Die antriebsverbundene Vorgelegewelle, beispielsweise die zweite Vorgelegewelle 17, ist über eine eingelegte Gangstufe, beispielsweise Gangstufe 4 mit der Hauptwelle 13 antriebsverbunden. Im Antriebsfall ist die Hauptwelle 13 über die auf HIGH oder LOW geschaltete Schalteinrichtung 201 des Bereichsgruppengetriebes 21 mit der Ausgangswelle 12 und über eine geschaltete Gangstufe, beispielsweise Gangstufe 4, mit der zweiten Vorgelegewelle 17 antriebsverbunden. Über die zweite Kupplung 19 erfolgt somit ein Kraftfluss bis zur Ausgangswelle 12.

Im dargestellten Ausführungsbeispiel ist die Eingangswelle 11 mit der Hauptwelle 13 direkt über eine weitere Schalteinrichtung 40 verbindbar. Dadurch kann ein direkter Durchtrieb - hier mit Gangstufe 6 bezeichnet - zwischen der Eingangswelle 11 und der Hauptwelle 13 ermöglicht werden.

Das Doppelkupplungsgetriebe 10 kann modular aufgebaut sein und aus einem Kupplungsteil 50, einem Hauptgetriebeteil 60 und dem Bereichsgruppengetriebeteil 70 bestehen, und somit für unterschiedliche Einsatzgebiete und Fahrzeuge, wie zum Beispiel Autobusse, Lastkraftwagen, Straßenfahrzeuge und Geländefahrzeuge Anwendung finden.

Mit der ersten Vorgelegewelle 16, oder einer Zwischenwelle 16a ist direkt oder indirekt - über eine weitere Zahnradstufe ZA8, die durch Festräder z15 und z17 gebildet ist - eine Dauerbremseinrichtung (Retarder) 30 verbunden.

### Hochschaltvorgang:

Ist der höchste Gang 6 (direkter Durchtrieb) im Hautgetriebe 60 der langsameren Bereichsgruppe LOW erreicht, so wird der zusätzlich angeordnete nächsthöhere Gang 7 eingelegt und mittels Kupplungswechsel 19 auf 18 eine normale Lastschaltung im nun lastfreien Bereichsgruppengetriebe 21 vollzogen. Sobald die Zugkraft über diesen Gang 7 erfolgt, ist die Bereichsgruppe 21 ohne Kraftübertragung und kann in Neutralstellung gebracht und somit der Bereich von LOW auf HIGH gewechselt werden. Ist der Bereichswechsel erfolgt, kann der nächsthöhere Gang 2 eingelegt werden und mittels Kupplungswechsel 18 auf 19 wieder eine normale Lastschaltung vollzogen werden.

### Runterschaltvorgang :

Ist der niedrigste Gang 2 im Hautgetriebe 60 der schnelleren Bereichsgruppe HIGH erreicht, so wird der zusätzlich angeordnete nächstniedrige Gang 7 eingelegt und mittels Kupplungswechsel 19 auf 18 eine normale Lastschaltung vollzogen. Sobald die Zugkraft über diesen Gang 7 erfolgt, ist die Bereichsgruppe 21 ohne Kraftübertragung und kann in Neutralstellung gebracht und somit der Bereich von HIGH auf LOW gewechselt werden. Ist der Bereichswechsel erfolgt, kann der nächstniedere Gang 6 eingelegt werden und mittels Kupplungswechsel 18 auf 19 wieder eine normale Lastschaltung vollzogen werden.

Somit kann ohne Zugkraftunterbrechung ein Schalten des Bereichsgruppengetriebes 21 durchgeführt werden, wobei ein äußerst geringer mechanischer und steuerungstechnischer Zusatzaufwand erforderlich ist.

Der modulare Aufbau ermöglicht auch eine Anwendung und ein Aufrüsten von bereits bestehenden Getrieben. Somit ist ein Einsatz bei den gängigsten Doppelkupplungsgetrieben mit Bereichsgruppe möglich.

## Patentansprüche

1. Doppelkupplungsgetriebe (10) für ein Kraftfahrzeug, mit einer Eingangswelle (11) und einer Hauptwelle (13), wobei die Eingangswelle (11) über eine schaltbare erste Kupplung (18) mit einer ersten Vorgelegewelle (16) und über eine schaltbare zweite Kupplung (19) mit einer zweiten Vorgelegewelle (17) verbindbar ist, wobei die erste Vorgelegewelle (16) und die zweite Vorgelegewelle (17) jeweils über zumindest eine über eine Schalteinrichtung (20) schaltbare Zahnradstufe (ZA1, ZA2, ZA3, ZA4, ZA5, ZR1) mit der Hauptwelle (13) antriebsverbindbar ist, und wobei zwischen der Hauptwelle (13) und einer Ausgangswelle (12) des Doppelkupplungsgetriebes ein Bereichsgruppengetriebe (21) angeordnet ist, wobei zumindest eine Vorgelegewelle (16, 17), vorzugsweise die erste Vorgelegewelle (16), über zumindest eine vorzugsweise schaltbare Zahnradstufe (ZA7) - besonders vorzugsweise über genau eine zusätzliche Zahnradstufe (ZA7) - unter Umgehung des Bereichsgruppengetriebes (21) direkt mit der Ausgangswelle (12) antriebsverbindbar ist, **dadurch gekennzeichnet, dass** eine mit der zumindest einen Vorgelegewelle (16) verbindbare Zwischenwelle (16a) direkt oder über eine weitere Zahnradstufe (ZA8) mit einer Dauerbremseinrichtung (30) antriebsverbunden oder antriebsverbindbar ist, und dass die Dauerbremseinrichtung (30) - direkt oder indirekt - mit der Zwischenwelle (16a) drehfest verbunden ist, welche über zumindest eine Schalteinrichtung (202a) mit der zumindest einen Vorgelegewelle (16) verbindbar ist.

2. Doppelkupplungsgetriebe (10) nach Anspruch 1, **dadurch gekennzeichnet, dass** die zusätzliche Zahnradstufe (ZA7) - vorzugsweise über die Zwischenwelle (16a) - mittels einer Schalteinrichtung (202a) mit der zumindest einen Vorgelegewelle (16) antriebsverbindbar oder von dieser trennbar ist (Fig. 3, Fig. 4).

3. Doppelkupplungsgetriebe (10) nach Anspruch 1 oder 2, **dadurch gekennzeichnet, dass** die zusätzliche Zahnradstufe (ZA7) nur Festräder (z15, z16) aufweist (Fig. 3, Fig. 4).

4. Doppelkupplungsgetriebe (10) nach einem der Ansprüche 1 bis 3, **dadurch gekennzeichnet, dass** die Dauerbremseinrichtung (30) indirekt über zumindest eine Zahnradstufe (ZA7, ZA8) mit der Ausgangswelle (12) drehfest verbunden ist (Fig. 3, Fig. 4).

5. Doppelkupplungsgetriebe (10) nach einem der Ansprüche 1 bis 4, **dadurch gekennzeichnet, dass** die Dauerbremseinrichtung (30) als hydrodynamische Bremse, als elektrodynamische Bremse, als Radialkolbenmaschine oder als Axialkolbenmaschine ausgebildet ist.

6. Doppelkupplungsgetriebe (10) nach einem der Ansprüche 1 bis 5, **dadurch gekennzeichnet, dass** das Bereichsgruppengetriebe (21) ein Planetengetriebe (24) aufweist, wobei vorzugsweise die zumindest eine schaltbare zusätzliche Zahnradstufe (ZA7) mit dem Planetenträger (24p) des Planetengetriebes (24) antriebsverbindbar oder antriebsverbunden ist.

7. Doppelkupplungsgetriebe (10) nach Anspruch 6, **dadurch gekennzeichnet, dass** der Planetenträger des Planetengetriebes mit der Ausgangswelle (12) drehfest verbunden ist.

8. Doppelkupplungsgetriebe (10) nach einem der Ansprüche 1 bis 7, **dadurch gekennzeichnet, dass** das Bereichsgruppengetriebe (21) zwei Bereichsgruppen (LOW, HIGH), und zwar eine langsame und eine schnelle Bereichsgruppe, aufweist.

9. Doppelkupplungsgetriebe (10) nach einem der Ansprüche 1 bis 8, **dadurch gekennzeichnet, dass** die mit der Eingangswelle (11) verbundene erste Kupplung (18) über eine erste Getriebestufe (14) mit der ersten Vorgelegewelle (16) und die mit der Eingangswelle (11) verbundene zweite Kupplung (19) über eine zweite Getriebestufe (15) mit der zweiten Vorgelegewelle (17) verbunden ist, wobei vorzugsweise die erste und die zweite Getriebestufe (14, 15) unterschiedliche Übersetzungsverhältnisse aufweisen.

10. Doppelkupplungsgetriebe (10) nach Anspruch 9, **dadurch gekennzeichnet, dass** der Übersetzungssprung zwischen erster und zweiter Getriebestufe (14, 15) dem gewünschten Übersetzungssprung zwischen den einzelnen Getriebegängen entspricht.

11. Doppelkupplungsgetriebe (10) nach einem der Ansprüche 1 bis 10, **dadurch gekennzeichnet, dass** die Eingangswelle (11) mit der Hauptwelle (13) direkt über eine zusätzliche Schalteinrichtung (40) verbindbar ist.

12. Doppelkupplungsgetriebe (10) nach einem der Ansprüche 1 bis 11, **dadurch gekennzeichnet, dass** die zusätzlichen Zahnradstufe (ZA7) so ausgelegt ist, dass das effektiv auf die Ausgangswelle (12) wirkende Übersetzungsverhältnis zwischen der höchsten Gangstufe (6) der langsamen Bereichsgruppe (LOW) und dem niedrigsten Gang (2) der schnellen Bereichsgruppe (HIGH) liegt.

13. Doppelkupplungsgetriebe (10) nach einem der Ansprüche 1 bis 12, **dadurch gekennzeichnet, dass** das Doppelkupplungsgetriebe (10) einen Kupplungsteil (50), einen Hauptgetriebeteil (60) und einen Bereichsgruppengetriebeteil (70) aufweist.

14. Doppelkupplungsgetriebe (10) nach einem der Ansprüche 1 bis 13, **dadurch gekennzeichnet, dass** die zusätzlichen Zahnradstufe (ZA7) - bezogen auf den Kraftfluss im Antriebsfall - nach dem Bereichgruppengetriebe (21) angeordnet ist.

## Claims

1. A dual clutch transmission (10) for a motor vehicle, comprising an input shaft (11) and a main shaft (13), wherein the input shaft (11) can be connected to a first countershaft (16) via an engageable first clutch (18) and to a second countershaft (17) via an engageable second clutch (19), wherein the first countershaft (16) and the second countershaft (17) can each be drive-connected to the main shaft (13) via at least one gear stage (ZA1, ZA2, ZA3, ZA4, ZA5, ZR1) which can be switched via a switching device (20), and wherein a range group transmission (21) is arranged between the main shaft (13) and an output shaft (12) of the dual clutch transmission, wherein at least one countershaft (16, 17), preferably the first countershaft (16), can be drive-connected directly to the output shaft (12) via at least one gear stage (ZA7) which is preferably switchable, especially preferably via precisely one additional gear stage (ZA7), by bypassing the range group transmission (21), **characterised in that** an intermediate shaft (16a) which can be connected to the at least one countershaft (16) is or can be drive-connected directly or via a further gear stage (ZA8) to a permanent braking device (30), and that the permanent braking device (30) is connected in a torsion-proof manner, either directly or indirectly, to the intermediate shaft (16), which is connectable via at least one switching device (202a) to the at least one countershaft (16).

2. A dual clutch transmission (10) according to claim 1, **characterised in that** the additional gear stage (ZA7) can be drive-connected to or separated from the at least one countershaft (16), preferably via the intermediate shaft (16a), by means of a switching device (202a) (Fig. 3, Fig. 4).

3. A dual clutch transmission (10) according to claim 1 or 2, **characterised in that** the additional gear stage (ZA7) only comprises fixed gears (z15, z16) (Fig. 3, Fig. 4).

4. A dual clutch transmission (10) according to one of the claims 1 to 3, **characterised in that** the permanent braking device (30) is indirectly connected in a torsion-proof manner to the output shaft (12) via at least one gear stage (ZA7, ZA8) (Fig. 3, Fig. 4).

5. A dual clutch transmission (10) according to one of the claims 1 to 4, **characterised in that** the permanent braking device (30) is formed as a hydrodynamic brake, an electrodynamic brake, a radial-piston machine or an axial-piston machine.

6. A dual clutch transmission (10) according to one of the claims 1 to 5, **characterised in that** the range group transmission (21) comprises a planetary gear (24), wherein preferably the at least one switchable additional gear stage (ZA7) is or can be drive-connected to the planetary carrier (24p) of the planetary gear (24).

7. A dual clutch transmission (10) according to claim 6, **characterised in that** the planetary carrier of the planetary gear is connected in a torsion-proof manner to the output shaft (12).

8. A dual clutch transmission (10) according to one of the claims 1 to 7, **characterised in that** the range group transmission (21) comprises two range groups (LOW, HIGH), i.e. a slow and a fast range group.

9. A dual clutch transmission (10) according to one of the claims 1 to 8, **characterised in that** the first clutch (18) connected to the input shaft (11) is connected to the first countershaft (16) via a first gear stage (14), and the second clutch (19) connected to the input shaft (11) is connected via a second gear stage (15) to the second countershaft (17), wherein preferably the first and the second gear stage (14, 15) have different transmission ratios.

10. A dual clutch transmission (10) according to claim 9, **characterised in that** the speed-ratio change between the first and the second gear stage (14, 15) corresponds to the desired speed-ratio change between the individual transmission gears.

11. A dual clutch transmission (10) according to one of the claims 1 to 10, **characterised in that** the input shaft (11) can be connected directly to the main shaft (13) via an additional switching device (40).

12. A dual clutch transmission (10) according to one of the claims 1 to 11, **characterised in that** the additional gear stage (ZA7) is formed in such a way that the transmission ratio effectively acting on the output shaft (12) lies between the highest gear stage (6) of the slow range group (LOW) and the lowest gear (2) of the fast range group (HIGH).

13. A dual clutch transmission (10) according to one of the claims 1 to 12, **characterised in that** the dual clutch transmission (10) comprises a clutch part (50), a main transmission part (60) and a range group transmission part (70).

14. A dual clutch transmission (10) according to one of the claims 1 to 13, **characterised in that** the additional gear stage (ZA7) is arranged after the range group transmission (21), relating to the power flow in the drive case.

## Revendications

1. Boîte de vitesses à double embrayage (10) d'un véhicule comportant un arbre d'entrée (11) et un arbre principal (13), l'arbre d'entrée (11) pouvant être relié par un premier embrayage commutable (18) à un premier arbre de renvoi (16) et par l'intermédiaire d'un second embrayage commutable (19) à un second arbre de renvoi (17), le premier arbre de renvoi (16) et le second arbre de renvoi (17) étant respectivement susceptibles d'être reliés par entraînement avec l'arbre principal (13) par l'intermédiaire d'au moins un étage d'engrenage (ZA1, ZA2, ZA3, ZA4, ZA5, ZR1) pouvant être commuté par l'intermédiaire d'un dispositif de commutation (20), et, entre l'arbre principal et l'arbre de sortie (12) de la boîte de vitesses à double embrayage étant montée une transmission à groupes relais (21), au moins l'un des arbres de renvoi (16, 17) de préférence le premier arbre de renvoi (16) pouvant être relié directement par entraînement avec l'arbre de sortie (12) par l'intermédiaire d'au moins un étage d'engrenage (ZA7) de préférence commutable, et de façon particulièrement préférentielle, par l'intermédiaire d'exactement un étage d'engrenage supplémentaire (ZA7) en contournant la transmission à groupes relais (21),
**caractérisée en ce qu'**
un arbre intermédiaire (16a) pouvant être relié à l'arbre de renvoi (16) est relié ou peut être relié par entraînement avec un dispositif de freinage continu (30) directement, ou par l'intermédiaire d'un autre étage d'engrenage (ZA8), et le dispositif de freinage continu (30) est relié solidairement en rotation, directement ou indirectement à l'arbre intermédiaire (16a) qui peut être relié par l'intermédiaire d'au moins un dispositif de commutation (202a) avec l'arbre de renvoi (16).

2. Boîte de vitesses à double engrenage (10) conforme à la revendication 1,
**caractérisée en ce que**
l'étage d'engrenage supplémentaire (ZA7) peut être relié par entraînement avec l'arbre de renvoi (16) ou être désolidarisé de cet arbre (16) de préférence par l'intermédiaire de l'arbre intermédiaire (16a) au moyen d'un dispositif de commutation (202a) (fig. 3, fig. 4).

3. Boîte de vitesses à double engrenage (10) conforme à la revendication 1 ou 2,
**caractérisée en ce que**
l'étage d'engrenage supplémentaire (ZA7) ne comporte que des pignons fixes (z15, z16) (fig. 3, fig. 4).

4. Boîte de vitesses à double embrayage (10) conforme à l'une des revendications 1 à 3,
**caractérisée en ce que**
le dispositif de freinage continu (30) est relié solidairement en rotation à l'arbre de sortie (12) indirectement par l'intermédiaire d'au moins un étage d'engrenage (ZA7, ZA8) (fig. 3, fig. 4).

5. Boîte de vitesses à double embrayage (10) conforme à l'une des revendications 1 à 4,
**caractérisée en ce que**
le dispositif de freinage continu (30) est réalisé sous la forme d'un frein hydrodynamique, d'un frein électrodynamique, d'une machine à pistons radiaux ou d'une machine à pistons axiaux.

6. Boîte de vitesses à double engrenage (10) conforme à l'une des revendications 1 à 5,
**caractérisée en ce que**
la transmission à groupes relais (21) comporte une transmission planétaire (24), et de préférence l'étage d'engrenage supplémentaire commutable (ZA7) peut être relié ou est relié par entraînement avec la cage (24p) de la transmission planétaire (24).

7. Boîte de vitesses à double embrayage (10) conforme à la revendication 6,
**caractérisée en ce que**
la cage de la transmission planétaire est reliée solidairement en rotation à l'arbre de sortie (12).

8. Boîte de vitesses à double engrenage (10) conforme à l'une des revendications 1 à 7,
**caractérisée en ce que**
la transmission à groupes relais (21) comporte deux groupes relais (LOW, HIGH) à savoir un groupe relais lent et un groupe relais rapide.

9. Boîte de vitesses à double engrenage (10) conforme à l'une des revendications 1 à 8,
**caractérisée en ce que**
le premier embrayage (18) relié à l'arbre d'entrée est relié au premier arbre de renvoi (16) par l'intermédiaire d'un premier étage de transmission (14) et le second embrayage (19) relié à l'arbre d'entrée (11) et relié au second arbre de renvoi (17) par l'intermédiaire d'un second étage de transmission (15), et de préférence le premier étage de transmission et le second étage de transmission (14, 15) ont des rapports de démultiplication différents.

10. Boîte de vitesses à double engrenage (10) conforme à la revendication 9,
**caractérisée en ce que**
l'étendue de la démultiplication entre le premier étage de transmission et le second étage de transmission (14, 15) correspond à l'étendue de la démultiplication souhaitée entre les rapports de vitesse.

11. Boîte de vitesses à double embrayage (10) conforme à l'une des revendications 1 à 10,
**caractérisée en ce que**
l'arbre d'entrée (11) peut être directement relié à l'arbre principal (13) par l'intermédiaire d'un dispositif de commutation supplémentaire (40).

12. Boîte de vitesses à double embrayage (10) conforme à l'une des revendications 1 à 11,
**caractérisée en ce que**
l'étage d'engrenage supplémentaire (ZA7) est réalisé de sorte que le rapport de démultiplication agissant réellement sur l'arbre de sortie (12) soit situé entre le rapport de vitesse le plus élevé (6) du groupe relais lent (LOW) et le rapport de vitesse le plus faible (2) du groupe relais rapides (HIGH).

13. Boîte de vitesses à double embrayage (10) conforme à l'une des revendications 1 à 12,
**caractérisée en ce qu'**
il comporte une partie d'embrayage (50), une partie de transmission principale (60) et une partie de transmission à groupes relais (70).

14. Boîte de vitesses à double embrayage (10) conforme à l'une des revendications 1 à 13,
**caractérisée en ce que**
l'étage d'engrenage supplémentaire (ZA7) est situé à l'arrière de la transmission à groupes relais (21) par rapport au flux des forces en cas d'entraînement.
